# EUROPEAN PATENT SPECIFICATION

(11) **EP 0 972 436 B1**
(45) Date of publication and mention of the grant of the patent: **05.01.2005**
(21) Application number: 98308806.3
(22) Date of filing: 27.10.1998
(51) Int. Cl.: A01B 33/10

(54) **Tillage tine**
Bodenbearbeitungszinken
Dent pour cultivateur

(30) Priority: 17.07.1998 JP 20340398; 24.07.1998 JP 20968598
(43) Date of publication of application: 19.01.2000
(73) Proprietor: Kobashi Kogyo Co., Ltd., Okayama-shi Okayama-ken 701-0213 (JP)
(72) Inventor: Kobashi, Takeshi, Okayama-ken 701-0213 (JP); Fujiwara, Noboru, Okayama-ken 701-0213 (JP); Nagaya, Katsunari, Okayama-ken 701-0213 (JP)
(74) Representative: Kemp, Paul Geoffrey

(56) References cited:
- DE-A- 3 329 009
- FR-A- 993 150
- DATABASE WPI Section PQ, Week 199644 Derwent Publications Ltd., London, GB; Class P11, AN 1996-436679 XP002122222 & JP 08 214605 A (YANMAR AGRIC EQUIP CO LTD), 27 August 1996 (1996-08-27)
- DATABASE WPI Section PQ, Week 199716 Derwent Publications Ltd., London, GB; Class P11, AN 1997-172879 XP002122223 & JP 09 037601 A (YANMAR AGRIC EQUIP CO LTD), 10 February 1997 (1997-02-10)
- DATABASE WPI Section PQ, Week 199806 Derwent Publications Ltd., London, GB; Class P11, AN 1998-056383 XP002122224 & JP 09 298903 A (KOBASHI KOGYO KK), 25 November 1997 (1997-11-25)

## Description

The present invention relates to a tillage tine for use in cultivation, particularly to a tillage tine of a type which is adapted to be attached to a horizontal rotating shaft, so as to form a tilling rotor of a tractor for tilling a field. A tractor, when used to till a field is usually equipped with a tilling rotor having a plurality of tillage tines.

It is known to provide a plurality of tillage tines fixed on a horizontal rotating shaft of the tractor, in a manner such that each extends radially from the shaft in almost every radial direction. Conventionally, each of the tillage tines is formed to include a base portion, a longitudinal cutting portion and a lateral cutting portion. When viewed along the longitudinal direction of a tillage tine, the base portion is of larger thickness than any other portions, but there is almost no change in the thickness from the longitudinal cutting portion to a front end of the lateral cutting portion. When viewed in the lateral direction of the same tillage tine, it be seen that the base portion has a larger thickness than any other portions, but there is almost no change in the thickness from the longitudinal cutting portion to the front end of the lateral cutting portion.

It is also known to provide tillage tines which are installed through flanges on a horizontal rotating shaft of the tractor in a manner such that they extend radially from the shaft in almost every radial direction. Conventionally, each of the tillage tines is formed to include a base portion, a longitudinal cutting portion and a lateral cutting portion bent to one side. A cutting edge is formed extending from the longitudinal cutting portion to a front end of the lateral cutting portion. If a length from the base portion to the front end of the lateral cutting portion is relatively short and a bending angle of the lateral cutting portion is relatively small, a structure obtained by attaching such a tillage tine through a flange to a horizontal rotating shaft of a tractor, will look like a flower petal, so that a tillage tine of this type may be called "a flower type tine". On the other hand, if a length from the base portion to the front end of the lateral cutting portion is relatively long and a bending angle of the lateral cutting portion is relatively large, a structure obtained by attaching such a tillage tine through a flange to a horizontal rotating shaft of a tractor, will be an L-shaped structure, so that a tillage tine of this type may be called "L type tine".

Any of the conventional tillage tines used in cultivation will be abraded and an abraded tine will have to be replaced by a new one when the abrasion is severe. Even a severely abraded tine is often found to have a considerable thickness of material remaining around its cutting portions. Throwing away such a tillage tine is not economical.

A tillage tine requires certain properties such as sufficient breakability for breaking soil lump, excellent reversibility for reversing deep soil, ability to level the soil, but also properties such as a sufficient resistance to abrasion and strength to resist impact. It is required that a tillage tine should be manufactured at a low cost.

The reader may be further enlightened as to the state of the art by reference to JP-A-82/4605 with reference to which each independent claim of the present application are characterised.

It is an object of the present invention to provide an improved tillage tine having sufficient breakability, excellent reversibility, a sufficient soil leveling ability, durability and strength so as to solve the above-mentioned problems peculiar to the above-mentioned prior arts.

According to a first aspect of the present invention, there is provided a tillage tine as defined in claim 1.

According to a second aspect of the present invention, there is provided as defined in claim 3.

In particular, an abrasion proof coating is formed on an area of the inner face of the bent portion of the lateral cutting portion on the tillage tine, extending from the longitudinal cutting portion to the front end of the upper edge of the lateral cutting portion.

A tillage tine constructed in accordance with the present invention will now be described with reference to the accompanying drawings: in which,
Fig. 1 is a plain view illustrating a tillage tine made according to a first embodiment of the present invention.
Fig. 2 is a cross sectional view taken along a line A-A of Fig. 1.
Fig. 3 is a cross sectional view taken along a line B-B of Fig. 1.
Fig. 4 is a partially sectional view taken along a curved line R of Fig. 1.
Fig. 5 is a side elevation indicating the tillage tine of Fig. 1.
Fig. 6 is a plain view illustrating a tillage tine made according to a second embodiment of the present invention.

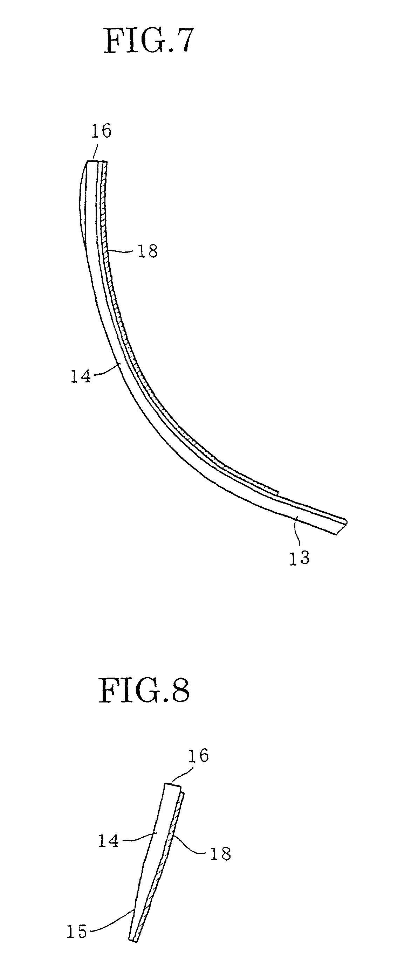

Fig. 7 is a side elevation illustrating the tillage tine of Fig. 6.
Fig. 8 is an end view illustrating the tillage tine of Fig. 6.
Fig. 9 is a plain view illustrating a tillage tine made according to a third embodiment of the present invention.
Fig. 10 is a side elevation illustrating the tillage tine of Fig. 9.
Fig. 11 is an end view illustrating the tillage tine of Fig. 9.

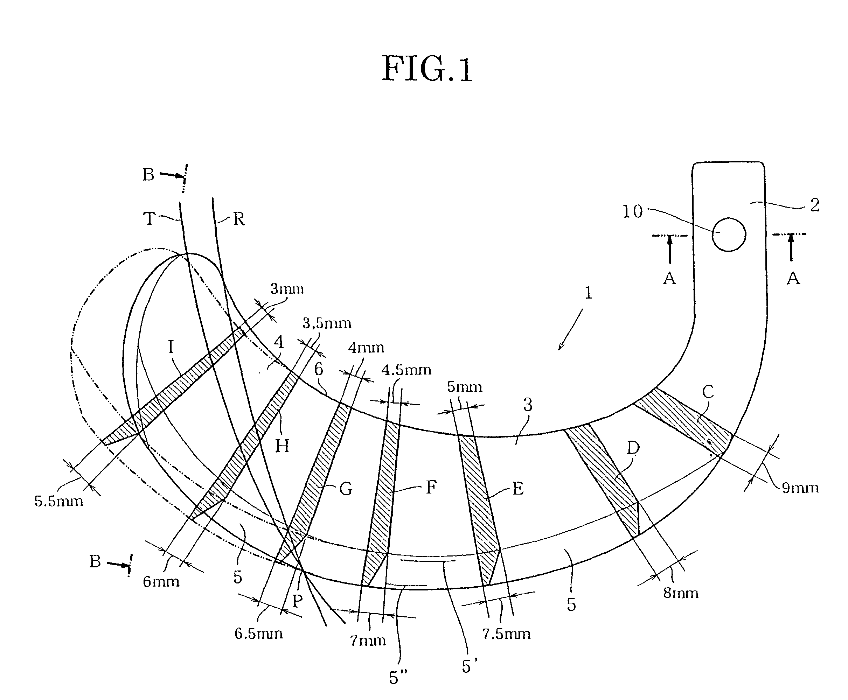

A first embodiment of the present invention is illustrated in Figs. 1 - 5.

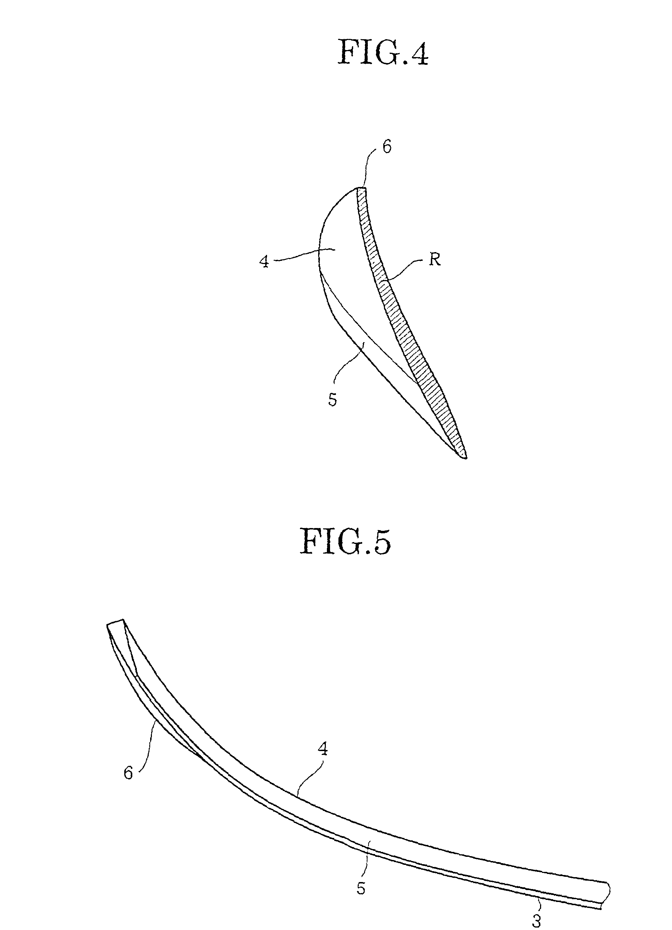

In Fig. 1, a tillage tine 1 has an attachment base portion 2 formed with an attachment hole 10. A plurality of such tillage tines 1 may be attached to a horizontal rotating shaft (not shown) in a tractor, by virtue of the attachment hole 10, so that the tillage tines may be arranged radially on the horizontal rotating shaft. The tillage tine 1 has a longitudinal cutting portion 3 formed continuously and integrally with the attachment base portion 2, a lateral cutting portion 4 formed continuously and integrally with the longitudinal cutting portion 3. The lateral cutting portion 4 is slightly bent out of the plain to curve towards one side of the tillage tine 1 as can best be seen in Figure 5. A cutting edge 5 is formed extending along the longitudinal cutting portion 3 and the lateral cutting portion 4, on the side towards which the lateral cutting portion 4 is bent.

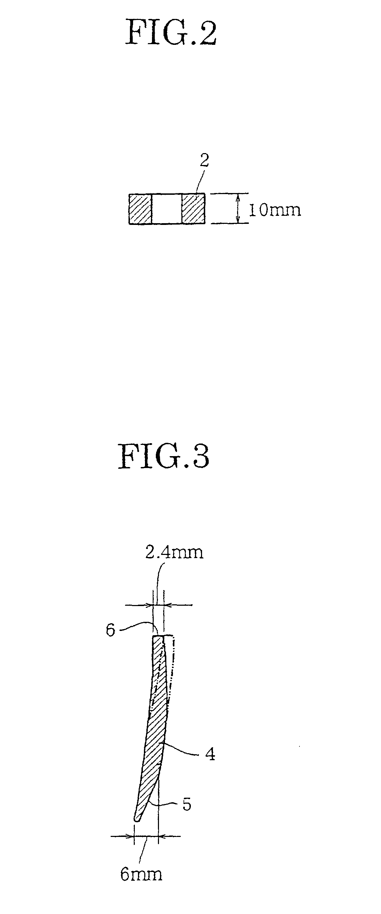

The tillage tine 1 has a thickness varying in a manner such that its attachment base portion 2 is of greatest thickness and its thickness is gradually lessened towards the lateral cutting portion 4. For example, the attachment base portion 2 has a thickness of 10 mm (Fig. 2), a portion C has a maximum thickness of 9 mm, a portion D has a maximum thickness of 8 mm, a portion E has a maximum thickness of 7.5 mm, a portion F has a maximum thickness of 7 mm, a portion G has a maximum thickness of 6.5 mm, a portion H has a maximum thickness of 6 mm, a portion I has a maximum thickness of 5.5 mm.

Referring to Figs. 1 and 3 - 5, the tillage tine I has an upper edge 6 the front portion of which is slightly bent outward, in a manner such that a slightly S-shaped pattern is formed extending from the longitudinal cutting portion 3 to the front portion of the upper edge 6, as generally shown by a cross section (or a curve) R in Fig. 4.

T represents a trochoid curve passing through a point P when the tillage tine is in tilling operation. R represents a curve located on the inner side of the trochoid curve T and passing though the point P. A base portion 5' of the cutting edge 5 has the largest thickness, then the thickness becomes gradually smaller towards both the most sharpened portion 5" and the upper edge 6. In more detail, the attachment base portion 2 has a thickness of 10 mm at a position of A-A line shown in Fig. 1. At the longitudinal cutting portion 3, a portion C has a maximum thickness of 9 mm, a portion D has a maximum thickness of 8 mm, a portion E has a maximum thickness of 7.5 mm and its upper edge 6 has a thickness of 5 mm, a portion F has a maximum thickness of 7 mm and its upper edge 6 has a thickness of 4.5, a portion G has a maximum thickness of 6.5 mm and its upper edge 6 has a thickness of 4 mm, a portion H has a maximum thickness of 6 mm and its upper edge 6 has a thickness of 3.5 mm, a portion I has a maximum thickness of 5.5 mm and its upper edge has a thickness of 3 mm.

When a plurality of tillage tines 1 made according to the first embodiment are attached to a horizontal rotating shaft of a tractor to form a tilling rotor. To perform a tilling operation the tilling rotor is rotated on a field. During the tilling operation, the longitudinal cutting portion 3 and the lateral cutting portion 4 serve to till the soil by breaking soil lumps, digging, reversing and further levelling the soil. Since the base portion 5' of the cutting edge 5 is made to have the largest thickness in the lateral direction of a tillage tine 1, the durability of a tillage tine has been greatly increased. This is because the base portion 5' of the cutting edge 5 is most likely to be abraded.

The attachment base portion 2 of the tillage tine 1 has a thickness larger than any other portions of the tine 1. The thickness of the tine 1 is gradually reduced towards the lateral cutting portion 4. The base portion 5' of the cutting edge 5 has the largest thickness which is reduced towards both the most sharpened portion 5,' and the upper edge 6. These features contribute to increase the strength of the tillage tine 1 to resist impact. The tillage tine 1 advantageously has only a low vibration (low resonant frequency). Straw or other vegetation remaining on the field, are unlikely to entangle the tillage tine thus reducing the power demanded of the tractor driving the tilling rotor.

The tilling with the tillage tine 1 may prevent the soil from coagulating even if the soil is very wet. The tillage tine 1 is light and may be manufactured at low cost.

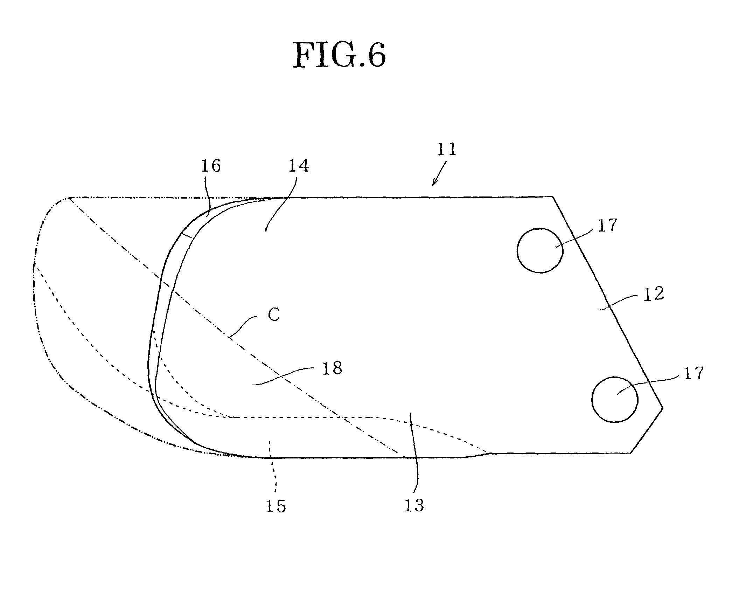

In Fig. 6, a tillage tine 11 is a second embodiment of the present invention. The tillage tine 11 has a greater size than the tillage tine 1 of the first embodiment and is adapted to be radially attached through a flange (not shown) to a horizontal rotating shaft (not shown) of a tractor.

The tillage tine 11 includes an attachment base portion 12 having a predetermined width and a predetermined thickness and adapted to be fixed on a flange secured on the horizontal rotating shaft. A longitudinal cutting portion 13 has almost the same width and the same thickness as the attachment base portion 12. A lateral cutting portion 14 is bent towards one side of the tine 11 as shown in figure 3. A cutting edge 15 is formed extending along the longitudinal cutting portion 13 and the lateral cutting portion 14. In particular, the cutting edge 15 is formed on one surface of the tine 11, opposite to the bending direction of the lateral cutting portion 14, i.e. on the outside of the bend. The lateral cutting portion 14 is so formed that the front end of its upper edge 16 is slightly bent outwardly, such that a slightly S-shaped pattern (not shown, but similar to that shown in Fig. 4 of the first embodiment) is formed on a cross section extending from the longitudinal cutting portion 13 to the front portion of the upper edge 16.

The attachment base portion 12 is formed with a pair of attachment holes 17, 17, each of which is adapted to receive a bolt, so that the tillage tine 11 may be fixed on to a flange (secured on the horizontal rotating shaft of a tractor), with the use of two bolt/nut pairs.

An abrasion proof coating 18 is formed on a part of the surface of the tillage tine 11, extending from the longitudinal cutting portion 13 to the upper edge 16 of the lateral cutting portion 14. In particular, the abrasion proof coating 18 is formed on the inner surface of the bent lateral cutting portion 14, under a line C (shown in Fig. 6) which serves as a boundary line dividing said inner surface into a coated area and an uncoated area. The abrasion proof coating 18 is provided to cover an area on the tillage tine 11 which is subjected to the most violent abrasion during tilling. Such an abrasion proof coating 18 is preferably formed by melting a metal such as chrome and has a predetermined thickness.

After such a tillage tine 11 is attached to the horizontal rotating shaft, a structure which looks like a flower petal is formed, so that a tillage tine of this type may be called "flower type tine".

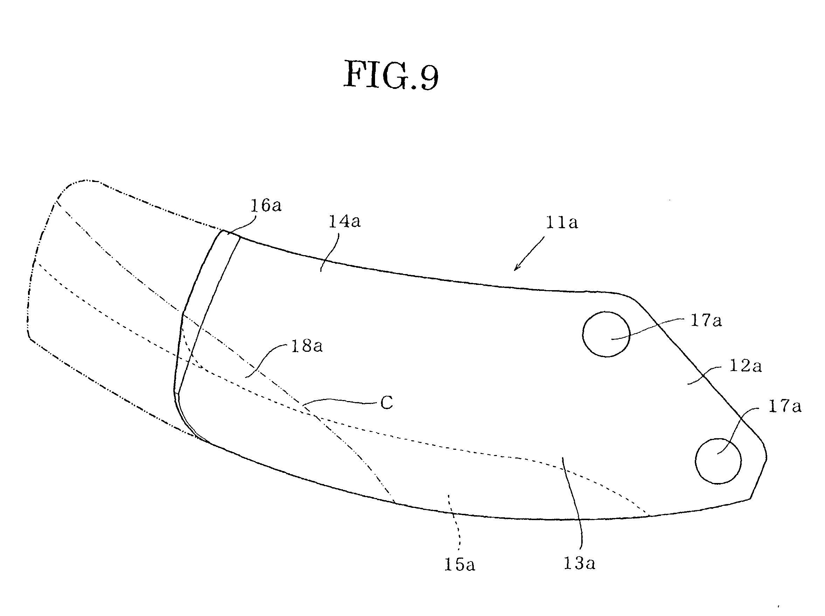

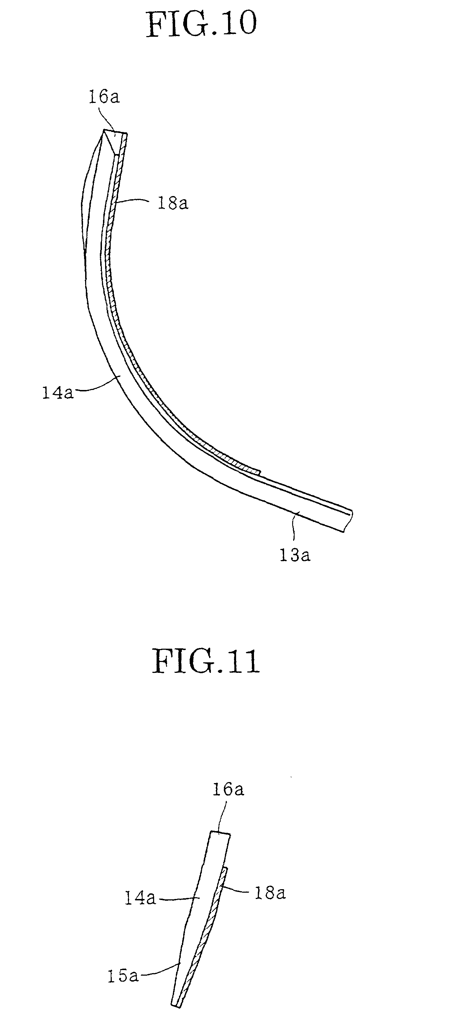

A third embodiment of the present invention is illustrated in Figs. 9 - 11.

In Fig. 9, a tillage tine 11a is of a size larger than that of the first embodiment and is adapted to be radially attached through a flange (not shown) to a horizontal rotating shaft (not shown) of a tractor. As shown in Fig. 9, the tillage tine 11a includes an attachment base portion 12a having a predetermined width and a predetermined thickness and is adapted to be fixed to the flange. A longitudinal cutting portion 13a has almost the same width and the same thickness as the attachment base portion 12a. A lateral cutting portion 14a is bent towards one side of the tine 11a. A cutting edge 15a is formed extending along the longitudinal cutting portion 13a and the lateral cutting portion 14a. The cutting edge 15a is formed on one surface of the tine 11a, opposite to the bending direction of the lateral cutting portion 14a (i.e. on the outside of the bend). The lateral cutting portion 14a is so formed that a front end of its upper edge 16a is slightly bent outwardly, such that a slightly S-shaped pattern (not shown, but similar to that shown in Fig. 4 of the first embodiment) is formed on a cross section extending from the longitudinal cutting portion 13a to the front portion of the upper edge 16a.

The tillage tine 11a of the third embodiment is longer than the tillage tine 11 of the second embodiment. The angle of through which the lateral cutting portion 14a in the third embodiment is bent is larger than that of the lateral cutting portion 14 in the second embodiment. As compared with the second embodiment, the tillage tine 11a is bent with a more gentle angle from the attachment base portion 12a to the front end of the lateral cutting portion 14a. This may mean that the radius of curvature of the bend of the tillage tine of the third embodiment is greater than that of the radius of curvature in the first embodiment.

Similarly to the second embodiment, the attachment base portion 12a is formed with a pair of attachment holes 17a, 17a, each of which is adapted to receive a bolt, so that the tillage tine 11a may be fixed on to a flange secured on the horizontal rotating shaft in a tractor, with the use of two bolt/nut pairs.

An abrasion proof coating 18a is formed on a part of the surface of the tillage tine 11a, extending from the longitudinal cutting portion 13a to the upper edge 16a of the lateral cutting portion 14a. In particular, the abrasion proof coating 18a is formed on the inner surface of the bent lateral cutting portion 14a, under a line C (shown in Fig. 9) which serves as a boundary line dividing said inner surface into a coated area and an uncoated area. The abrasion proof coating 18a is formed to cover an area on the tillage tine which is subjected to the most violent abrasion during tilling. In practice, such an abrasion proof coating 18a may be formed by melting a metal such as a chrome and has a predetermined thickness.

After such tillage tine is attached through a flange to a horizontal rotating shaft in a tractor, an L-shaped structure is thus formed, so that a tillage tine of this type may be called an "L type tine

After a plurality of tillage tines 11 or 11a made according to the second or third embodiment of the present invention are attached on a horizontal rotating shaft, a tilling rotor may be formed for a tractor for tilling a field. The tilling rotor 11a is rotated about the shaft so that the tillage tines 11 or 11a may till soil on the field. During tilling the longitudinal cutting portion 13 or 13a and the lateral cutting portion 14 or 14a serve to till the soil by breaking soil lumps, digging, reversing, and further levelling the soil.

In the second and the third embodiment of the present invention, the lateral cutting portions 14 and 14a are so formed that the front ends of their upper edges 16 and 16a are slightly bent outwardly, such that slightly S-shaped patterns are gently formed on a cross section (not shown, but similar to that shown in Fig. 4 of the first embodiment) extending from the longitudinal cutting portions 13, 13a to the front portions of the upper edges 16, 16a. Therefore, during the above tilling operation the soil may be tilled by breaking soil lumps, digging, reversing, and further levelling soil. A force exerted on the front end portions of the upper edges 16, 16a of the lateral cutting portions 1A, 14a is relieved so that a tilling resistance may be reduced. The power demand for tilling is therefore reduced.

Since the abrasion proof coatings 18, 18a have been formed to cover the areas on the tillage tines which are subjected to the most violent abrasion during tilling durability of the tillage tines is greatly improved.

Moreover, since cutting edges 5, 5a are formed on the surfaces opposite to the bent inner surfaces of the lateral cutting portions 14, 14a of the tillage tines 11, 11a, these cutting edges 15, 15a will serve to break soil lumps efficiently. Together with the effect obtainable from the abrasion proof coatings 18, 18a, it is proved effective for keeping the cutting edges 15, 15a sharp for a long time, thereby minimising tilling resistance over the life of the tine.

While the presently preferred embodiments of the this invention have been shown and described above, it is to be understood that these disclosures are for the purpose of illustration.

## Claims

1. A tillage tine (1) adapted to be attached to a horizontal rotating shaft in a tractor, said tine (1) having an attachment base portion (2), a longitudinal cutting portion (3) integrally formed with the attachment base portion (2), a lateral cutting portion (4) integrally formed with the longitudinal cutting portion (3) but bent to one side of the tillage tine (1):
the attachment base portion (2) having a thickness which is greater than any other portions of the tillage tine (1)
**characterised by** the provision of a sharpened a cutting edge (5) on an inner side of a bent portion of the lateral cutting portion (4), extending along the longitudinal cutting portion (3) and the lateral cutting portion (4) to a front end of the lateral cutting portion (4);
a base portion (5') of the cutting edge (5) has the largest thickness and the thickness is gradually reduced towards both the most sharpened portion (5") of the cutting edge (5) and an upper edge (6) of the tine (1)
and the tine thickness is gradually reduced from the attachment base portion (2) towards the lateral cutting portion (4), the lateral cutting portion (4) is formed in a manner such that its front end is bent towards one side of the tillage tine (1), and
a cross section (R) extending from the longitudinal cutting portion (3) to a front end of the upper edge (6) is S-shaped.

2. A tillage tine according to claim 1, wherein, the attachment base portion 2 has a thickness of 10 mm, a portion C adjacent to the attachment base portion has a maximum thickness of 9 mm, a portion D adjacent to the portion C has a maximum thickness of 8 mm, a portion E adjacent to the portion D has a maximum thickness of 7.5 mm, a partion F adjacent to the portion E has a maximum thickness of 7 mm, a portion G adjacent to the portion F has a maximum thickness of 6.5 mm, a portion H Adjacent to the portion G has a maximum thickness of 6 mm, a portion I adjacent the portion H has a maximum thickness of 5.5 mm.

3. A tillage tine (11) adapted to be attached through a flange to a horizontal rotating shaft in a tractor, said tine (11) having an attachment base portion (12), a longitudinal cutting portion (13) integrally formed with the attachment base portion (12), and a lateral cutting portion (14) integrally formed with the longitudinal cutting portion (13) but bent to one side of the tillage tine (11) the attachment base portion (12) has a predetermined width and a predetermined thickness, and is adapted to be fixed to a flange;
the longitudinal cutting portion (13) has a width and a thickness which are substantially the same as those of the attachment base portion (12);
the lateral cutting portion (14) has a width and a thickness which are substantially the same as those of the attachment base portion (12);
a cutting edge (15) is formed on one surface of the tillage tine (11) opposite to a bent inner surface of the lateral cutting portion (14) **characterised in that**
a front end of an upper edge (16) of the lateral cutting portion (14) is bent outwardly, such that a cross section extending from the longitudinal cutting portion (13 to a front end of the upper edge (16) is S-shaped.

4. A tillage tine according to claim 3, wherein an abrasion proof coating (18) is formed on an area of the inner face of the bent portion of the lateral cutting portion (14) on the tillage tine (11), extending from the longitudinal cutting portion (13) to the front end of the upper edge (16) of the lateral cutting portion (14)

5. A tillage tine according to claim 4, wherein a abrasion proof coating (18) is of a metal.

6. A tillage tine according to claim 5 wherein the metal is chrome.

## Patentansprüche

1. Bodenbearbeitungszinke (1), angepaßt, um an eine horizontal rotierende Welle eines Traktors angefügt zu sein, wobei die Zinke (1) aufweist einen Befestigungsbasisabschnitt (2), einen longitudinalen Schneidabschnitt (3), der einstückig mit dem Befestigungsbasisabschnitt (2) gebildet ist, einen lateralen Schneidabschnitt (4), der einstückig mit dem longitudinalen Schneidabschnitt (3) gebildet ist, aber zu einer Seite der Bodenbearbeitungszinke (1) gebogen ist:
der Befestigungsbasisabschnitt (2) eine Dicke aufweist, die größer als die jeden anderen Abschnittes der Bodenbearbeitungszinke (1) ist,
**gekennzeichnet durch** die Bereitstellung einer geschärften Schneidkante (5) an einer Innenseite eines gekrümmten Abschnittes des lateralen Schneidabschnittes (4), der sich entlang des longitudinalen Schneidabschnittes (3) und des lateralen Schneidabschnittes (4) zu einem vorderen Ende des lateralen Schneidabschnittes (4) erstreckt;
einen Basisabschnitt (5') der Schneidkante (5) mit einer größten Dicke, wobei die Dicke graduell zu sowohl dem meisten geschärften Abschnitt (5") der Schneidkante (5) als einer oberen Kante (6) der Zinke (1) reduziert ist,
und die Zinkendicke graduell von dem Anfügebasisabschnitt (2) zu dem lateralen Schneidabschnitt (4) reduziert ist, wobei der laterale Schneidabschnitt (4) derart gebildet ist, daß sein vorderes Ende zu einer Seite der Bearbeitungszinke (1) gebogen ist, und
ein Querschnitt (R), der sich von dem longitudinalen Schneidabschnitt (3) zu einem vorderen Ende der oberen Kante (6) erstreckt, S-förmig ausgebildet ist.

2. Bodenbearbeitungszinke nach Anspruch 1, wobei der Befestigungsbasisabschnitt (2) eine Dicke von 10 mm, ein Abschnitt C benachbart zu dem Befestigungsbasisabschnitt eine maximale Dicke von 9 mm, ein Abschnitt D benachbart zu dem Abschnitt C eine maximale Dicke von 8 mm, ein Abschnitt E benachbart zu dem Abschnitt D eine maximale Dicke von 7,5 mm, ein Abschnitt F benachbart zu dem Abschnitt E eine maximale Dicke von 7 mm, ein Abschnitt G benachbart zu dem Abschnitt F eine maximale Dicke von 6,5 mm, ein Abschnitt H benachbart zu dem Abschnitt G eine maximale Dicke von 6 mm, ein Abschnitt I benachbart zu dem Abschnitt H eine maximale Dicke von 5,5 mm aufweist.

3. Bearbeitungszinke (11), angepaßt, um durch einen Flansch an eine horizontale Drehwelle eines Traktors angefügt zu sein, wobei die Zinke (11) aufweist einen Befestigungsbasisabschnitt (12), einen longitudinalen Schneidabschnitt (13), der einstückig mit dem Befestigungsbasisabschnitt (12) gebildet ist, und einen lateralen Schneidabschnitt (14), der einstückig mit dem longitudinalen Schneidabschnitt (13) gebildet ist, aber zu einer Seite der Bearbeitungszinke (11) gebogen ist, wobei der Befestigungsbasisabschnitt (12) eine vorbestimmte Weite und eine vorbestimmte Dicke aufweist, und angepaßt ist, um an einem Flansch befestigt zu sein;
wobei der longitudinale Schneidabschnitt (13) eine Weite und eine Dicke aufweist, die im wesentlichen denen des Anfügebasisabschnittes (12) entsprechen;
der laterale Schneidabschnitt (14) eine Weite und eine Dicke aufweist, die im wesentlichen der des Anfügebasisabschnittes (12) entsprechen;
wobei eine Schneidkante (15) auf einer Oberfläche der Bearbeitungszinke (11) gebildet ist, die entgegengesetzt zu einer gebogenen inneren Oberfläche des lateralen Schneidabschnittes (14) angeordnet ist, **dadurch gekennzeichnet, daß**
ein vorderes Ende der oberen Kante (16) des lateralen Schneidabschnittes (14) auswärts gerichtet gebogen ist, so daß ein Querschnitt, der sich vom longitudinalen Schneidabschnitt (13) zu einem vorderen Ende der oberen Kante (16) erstreckt, S-förmig geformt ist.

4. Bearbeitungszinke nach Anspruch 3, wobei eine abriebfeste Schichtung (18) auf einem Abschnitt der Innenfläche des gebogenen Abschnittes des lateralen Schneidabschnittes (14) der Bearbeitungszinke (11) gebildet ist, das sich von dem longitudinalen Schneidabschnitt (13) zu dem vorderen Ende der oberen Kante (16) des lateralen Schneidabschnittes (14) erstreckt.

5. Bearbeitungszinke nach Anspruch 4, wobei die abriebfeste Schichtung (18) aus einem Metall ist.

6. Bearbeitungszinke nach Anspruch 5, wobei das Material Chrom ist.

## Revendications

1. Dent de labour (1) adaptée pour être attachée à un arbre tournant horizontal sur un tracteur, ladite dent (1) ayant une partie de base de fixation (2), une partie de coupe longitudinale (3) intégrée à la partie de base de fixation (2), une partie de coupe latérale (4) intégrée à la partie de coupe longitudinale (3) mais fléchie sur un côté de la dent de labour (1) ;
la partie de base de fixation (2) ayant une épaisseur qui est supérieure à toute autre partie de la dent de labour (1) ;
**caractérisée par** la fourniture d'un bord coupant affûté (5) sur un côté interne d'une partie fléchie de la partie de coupe latérale (4) s'étendant le long de la partie de coupe longitudinale (3) et de la partie de coupe latérale (4) jusqu'à une extrémité avant de la partie de coupe latérale (4) ;
une partie de base (5') du bord coupant (5) a la plus large épaisseur et l'épaisseur se réduit graduellement en direction à la fois de la partie la plus affûtée (5'') du bord coupant (5) et d'un bord supérieur (6) de la dent (1) ;
et l'épaisseur de la dent se réduit graduellement de la partie de base de fixation (2) vers la partie de coupe latérale (4), la partie de coupe latérale (4) est formée d'une manière telle que son extrémité avant soit fléchie en direction d'un côté de la dent de labour (1) ; et
une section transversale (R) s'étendant de la partie de coupe longitudinale (3) vers une extrémité avant du bord supérieur (6) est en forme de S.

2. Dent de labour selon la revendication 1, dans laquelle la partie de base de fixation 2 a une épaisseur de 10 mm, une partie C adjacente à la partie de base de fixation a une épaisseur maximum de 9 mm, une partie D adjacente à la partie C a une épaisseur maximum de 8 mm, une partie E adjacente à la partie D a une épaisseur maximum de 7,5 mm, une partie F adjacente à la partie E a une épaisseur maximum de 7 mm, une partie G adjacente à la partie F a une épaisseur maximum de 6,5 mm, une partie H adjacente à la partie G a une épaisseur maximum de 6 mm, une partie I adjacente à la partie H a une épaisseur maximum de 5,5 mm.

3. Dent de labour (11) adaptée par l'intermédiaire d'une bride à un arbre tournant horizontal sur un tracteur, ladite dent (11) ayant une partie de base de fixation (12), une partie de coupe longitudinale (13) intégrée à la partie de base de fixation (12), une partie de coupe latérale (14) intégrée à la partie de coupe longitudinale (13) mais fléchie sur un côté de la dent de labour (11), la partie de base de fixation (12) a une largeur prédéterminée et une épaisseur prédéterminée et est adaptée pour être fixée à une bride ;
la partie de coupe longitudinale (13) a une largeur et une épaisseur qui sont sensiblement les mêmes que celles de la partie de base de fixation (12) ;
la partie de coupe latérale (14) a une largeur et une épaisseur qui sont sensiblement les mêmes que celles de la partie de base de fixation (12) ;
un bord coupant (15) est formé sur une surface de la dent de labour (11) à l'opposé d'une surface interne fléchie de la partie de coupe latérale (14), **caractérisée en ce que** :
une extrémité avant d'un bord supérieur (16) de la partie de coupe latérale (14) est fléchie vers l'extérieur, de sorte qu'une section transversale s'étendant de la partie de coupe longitudinale (13) à une extrémité avant du bord supérieur (16) soit en forme de S.

4. Dent de labour selon la revendication 3, dans laquelle un revêtement résistant à l'abrasion (18) est formé sur une aire de la face interne de la partie fléchie de la partie de coupe latérale (14) sur la dent de labour (11), s'étendant de la partie de coupe longitudinale (13) à l'extrémité avant du bord supérieur (16) de la partie de coupe latérale (14).

5. Dent de labour selon la revendication 4, dans laquelle un revêtement résistant à l'abrasion (18) est en métal.

6. Dent de labour selon la revendication 5, dans laquelle le métal est le chrome.
